# EUROPEAN PATENT APPLICATION

(11) **EP 4 564 131 A1**
(43) Date of publication of application: **04.06.2025**
(21) Application number: 23213264.7
(22) Date of filing: 30.11.2023
(51) Int. Cl.: G06F 3/01, A63F 13/285, G06V 40/20

(54) **METHOD AND APPARATUS OF CONTROLLING HAPTIC ACTUATORS FROM LOCATION INFORMATION OF A SOURCE OF A HAPTIC EFFECT**

(71) Applicant: Go Touch VR, 59000 Lille (FR)
(72) Inventor: VEZZOLI, Eric, 75016 PARIS (FR)
(74) Representative: RVDB

(57) **Abstract**

There is provided methods and apparatus of controlling a set of haptic actuators. To reach that aim, location information representative of a time and spatial-based description of position and orientation of an avatar (11) relative to a source (12) of a haptic effect in a virtual environment is obtained, the avatar (11) being associated with a user (10). A first mapping information representative of a mapping between the set of haptic actuators and a set of parts of the avatar (11) is obtained. The source (12) is projected onto the according to the location information. Control data for controlling each haptic actuator is determined according to a result of the projecting and the first mapping information.

## Description

### FIELD

The present application generally relates to the field of haptic and, in particular, to the generating of control data for controlling a set of haptic actuators to render a haptic effect. The present application also relates to method and apparatus of processing data of a haptic signal representative of the haptic effect to generate the control data.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using one or more haptic devices, a haptic device corresponding to an arrangement of one or more haptic actuators, which is/are distributed on one or more body parts of a body of a user. For example, vibrotactile effects might be obtained with the use of haptic devices such as ERMs (Eccentric Rotating Mass), LRAs (Linear Resonant Actuators), and large bandwidth actuators like VCM (Voice Coil Motors), PZT (Piezoelectric Actuators), SMA (Shape Memory Alloy) or pressure-based actuators. Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

Haptic feedback may be used to increase the feeling of immersion of a user consuming a video content that is associated with haptic effects. The haptic effects to be rendered by the haptic device(s) may be associated with various sources in the multimedia content, a source corresponding for example to an event occurring in a virtual scene of the video content. A distortion between the video content and the rendering of the haptic effects associated with the video content may lead to a poor user-experience. For example, a mismatch between the location of the source of a haptic effect in the virtual scene and the location of the haptic actuator intended to render the haptic effect on the body of the user may limit the user-experience while consuming the video content. There is thus room for improvement to increase the feeling of immersion of a user consuming a video / multimedia content being associated with the rendering of haptic effects.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of controlling a set of haptic actuators, the method comprising the steps of:
- obtaining location information representative of a time and/or spatial-based description of position and orientation of an avatar relative to a source of a haptic effect in a virtual environment, the avatar being associated with a user;
- obtaining first mapping information representative of a mapping between the set of haptic actuators and a set of parts of the avatar;
- projecting the source onto the avatar in the virtual environment according to the location information;
- determining control data for controlling each haptic actuator of the set of haptic actuators, the control data being determined according to a result of the projecting and the first mapping information.

In an exemplary embodiment, the method further comprises:
- receiving second mapping information representative of a mapping between the set of haptic actuators and body parts of a body of the user and posture information representative of a posture of the user;
- determining spatial distribution information representative of a spatial distribution of the set of haptic actuators on the body of the user relatively to a set of body reference planes of the body of the user according to the second mapping information and the posture information, the set of body reference planes comprising at least one body reference plane, each body reference plane dividing the body into two complementary parts,
wherein the first mapping information is determined according to the spatial distribution information and a set of avatar reference planes, the set of avatar reference planes comprising at least one avatar reference plane, each avatar reference plane corresponding to one different body reference plane of the set of body reference planes, each avatar reference plane dividing the avatar into two complementary parts.

In an exemplary embodiment, the control data comprises time control information for time-based controlling each haptic actuator.

In an exemplary embodiment, the method further comprises receiving an input haptic signal representative of the haptic effect, the control data comprising haptic data for controlling each haptic actuator, the haptic data being determined according to the input haptic signal and the result of the projecting.

In an exemplary embodiment, the haptic data is determined by processing the input haptic signal according to the result of the projecting.

In an exemplary embodiment, the processing comprises amplitude modulating the input haptic signal according to amplitude parameters, the amplitude parameters being according to the result of said projecting.

In a further exemplary embodiment, the amplitude parameters are according to a distance between the source and each haptic actuator.

In another exemplary embodiment, the processing comprises frequency shifting the input haptic signal to obtain a doppler effect when a distance between the source and the avatar increases or decreases.

In a further exemplary embodiment, the method further comprises controlling each haptic actuator according to the control data.

In an additional exemplary embodiment, a plurality of haptic actuators of the set of haptic actuators is controlled based on a temporal sequence according to the time control information.

In another exemplary embodiment, at least two haptic actuators of the set of haptic actuators are controlled concurrently according to the control data to render at least a part of the haptic effect.

In an exemplary embodiment, the projecting is according to a conical projection with the apex of the cone corresponding to the source of the haptic effect.

According to a second aspect of the present application, there is provided an apparatus of controlling a set of haptic actuators, wherein the apparatus comprises a memory associated with at least a processor configured to implement the method in accordance with the first aspect of the present application.

According to a third aspect of the present application, there is provided a computer program product including instructions which, when the program is executed by one or more processors, causes the one or more processors to carry out a method according to the first aspect of the present application.

According to a fourth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic representation of a user watching at a video content displayed on a screen, in accordance with at least one exemplary embodiment;
**Figure 2** shows a schematic representation of a communication network for communicating the video content of figure 1, in accordance with at least one exemplary embodiment;
**Figure 3** shows a schematic representation of a processing scheme of the video content of figure 1, in accordance with at least one exemplary embodiment;
**Figure 4** shows a schematic representation of a mapping between the user of figure 1 and an avatar of the user associated with the video content of figure 1, in accordance with at least one exemplary embodiment;
**Figure 5** shows a schematic representation of a projection of a source of a haptic effect associated with the video content of figure 1 onto the avatar of figure 4, in accordance with at least one exemplary embodiment;
**Figure 6** shows a first example of a result of a processing applied to an input haptic signal representative of the haptic effect associated with the source of figure 5, in accordance with at least one exemplary embodiment;
**Figure 7** shows a second example of a result of a processing applied to an input haptic signal representative of the haptic effect associated with the source of figure 5, in accordance with at least one exemplary embodiment;
**Figure 8** shows a schematic block diagram of step(s) of a method of controlling a set of haptic actuators configured to render the haptic effect associated with the source of figure 5, in accordance with at least one exemplary embodiment;
**Figure 9** illustrates a schematic block diagram of an example of a system in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiment may be individually implemented, e.g., as an alternative embodiment.

At least one of the aspects generally relates to a method and apparatus of controlling a set of haptic actuators comprising one or more haptic actuators for the rendering of haptic effect(s). The haptic effect(s) may be associated with a multimedia content, e.g., a video content, the data representative of the haptic effect being received with the video data representative of the video content, e.g., comprised in the video data.

The haptic actuators correspond for example to LRA(s), VCM(s), ERM, PZT, SMA and/or pressure-based actuators, e.g., soft pneumatic actuator (SPA). Pressure-based actuators are configured to render pressure-based feedback, e.g., through pneumatic actuation.

Location information representative of a time and spatial-based description of position and orientation of an avatar relative to a source of the haptic effect to be rendered is obtained. The location information may be obtained according to the localization of the source of the haptic effect in a virtual environment into which an avatar moves, and according to the localization of the avatar in the virtual environment. The avatar may correspond to a virtual object, in the virtual environment, representing a user watching at the video content representing the virtual environment. The localization of the source and/or the localization of the avatar (controlled by the user) may change over time in the virtual environment.

The source of the haptic effect may correspond to a visual and/or audio event occurring in the virtual environment, e.g., an explosion, gunfire, footsteps, rumble of thunder, an object fall, etc.

The haptic effect is represented with data representative of an input haptic signal that is received with the video data/signal representative of the video content. Audio data/signal representative of an audio content associated with the video content may further be received with the video data/signal. The input haptic signal is intended to be provided to one or more haptic actuators for rendering the haptic effect when rendering the event associated with the haptic effect, i.e., displaying and/or audio rendering the event, depending on the type of the event.

A first mapping information representative of a mapping between the set of haptic actuators and a set of parts of the avatar may be obtained, for example received from a memory or determined from other information. The parts of the avatar may correspond to various body parts of the user the avatar is associated with.

Control data is determined for controlling each haptic actuator of the set of haptic actuators. The control data are determined according to the first mapping information and according to a projection of the source of the haptic effect onto the avatar in the space of the virtual environment, the projection aiming at determining which part(s) of the avatar may be exposed to the source of the haptic effect.

Such a process enables to select, in a set of haptic actuators available to render the haptic effect, the one or more haptic actuators, which are the most relevant to render the haptic effect, according to the displacement of the source and/or of the avatar in the virtual environment. The matching or correlation between the location of the source relative to the position of the avatar and the haptic actuators used to render the haptic effect is improved.

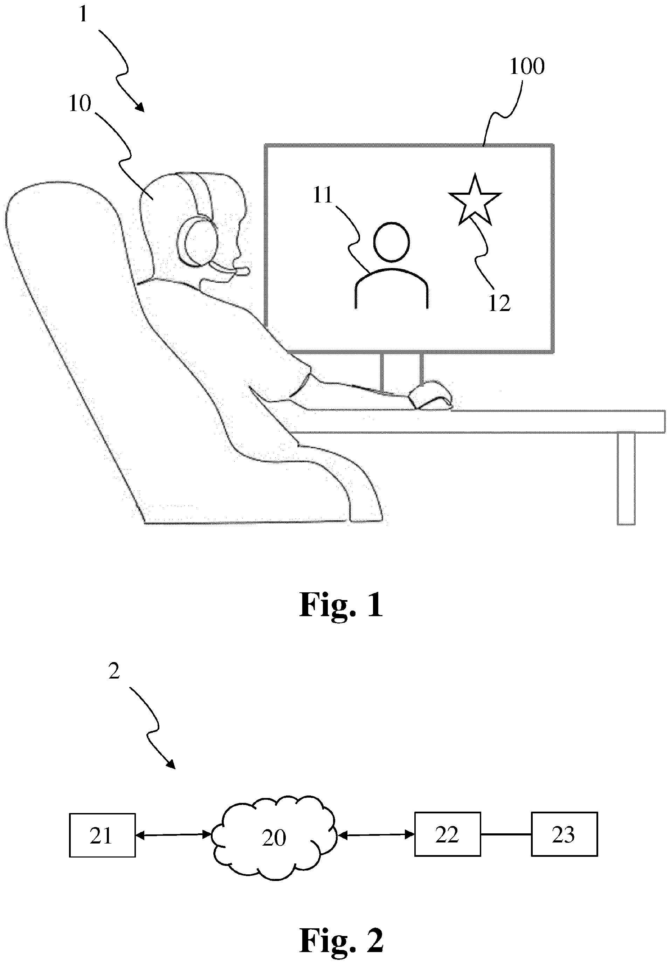

**Figure 1** illustrates a schematic representation of a user 10 consuming a video content in accordance with at least one exemplary embodiment.

Figure 1 shows a user 10 watching at a video content displayed on a display device 100. The display device 100 may be a monitor or screen connected to a computer, a screen of a laptop, a screen of a mobile device such as a tablet or a smartphone, a screen of a Head-Mounted Display (HMD), i.e., any device configured to display pixels of images of a video content.

According to the non-restrictive example of Figure 1, the user 10 is sitting in a chair. A set of haptic actuators is advantageously associated with various body parts of the user 10, the haptic actuators belonging to one or more haptic devices.

Examples of equipment or apparatus that may correspond to the haptic device include head mounted display devices (HMD, see-through glasses), wireless (e.g., Bluetooth^{®}) connected wearable haptic devices, haptic suit, mousepad, palm rest, chair, desk, XR headset, headphones, bracelet, head and/or lumbar support device or chair, mouse, or any other device suitable for rendering haptic effect(s) onto one or more parts of the user's body being in contact with the haptic device.

According to variants, the user 10 may be in postures different than the sitting position, for example in a standing position, in a prone position, in a reclining position, in a lying position or in a crouching position.

The video content that is displayed on the display device 100 comprises a sequence of images of a virtual environment, images of the video content corresponding to computer-generated images. According to a variant, the images of the video content may mix images of a real-world environment and virtual objects generated by computer, the video content corresponding to an augmented-reality (AR) content or to a Mixed Reality (MR) content.

Audio content may be associated with the video content for the rendering of sound with loudspeakers while displaying the images of the video content.

Haptic effects are advantageously associated with the video content, the video content corresponding to a visuo-haptic content.

The video content may for example correspond to a video game the user 10 is playing. In a video game, the sequence of images being displayed on the display device 100 may depend on instructions received from user interface(s) used by the user 10 to interact with the content of the video game. Such user interface may correspond to a mouse, a keypad, a gamepad.

The user 10 may use the user interface to control the move of an avatar 11 within the virtual environment of the video content displayed on the display device 100. The avatar 11 corresponds to a virtual object, corresponding for example to a figure or character of the scenario of the video game.

The avatar 11 may be displayed within the virtual environment according to different positions and orientations that may vary over time, depending on the instructions provided by the user 10. According to another example, the avatar may not be visible in the virtual environment. According to this example, the images of the video content representing the different scenes of the virtual environment into which the avatar moves are displayed according to the point of view of the avatar, as if the scenes were seen by the avatar moving into the virtual environment.

One or more sources of haptic effect(s) are advantageously associated with the video content, the source(s) corresponding for example to various events occurring when the avatar 11 evolves in the virtual environment.

The event a haptic effect is associated with may correspond to a visual event, to an audio event or to an audio and visual event.

An example of a source of a haptic effect is represented with a star 12. The location of the source of the haptic effect may vary in space and/or over time, depending for example on the type of the event the haptic effect is associated with. For example, the event may correspond to footsteps of a figure or character of the video game walking and moving in the vicinity of the avatar 11, the character being visible or not by the avatar 11. A haptic signal may be associated with each footstep heard by the avatar 11, the haptic signal being intended to be provided to one or more haptic actuators associated with one or more body parts of the user 11.

In an embodiment, the video data representative of the video content is for example stored in a storage device, such as a memory or a hard drive, of the apparatus used to render the video content (e.g., a computer, a laptop, a tablet, a smartphone). The audio data representative of the audio content and associated with the video content may be stored in the storage device, as well as the haptic data representative of the haptic effects associated with the video content.

In another embodiment, the video data, audio data and/or haptic data are received through a communication network, as described hereinafter with regard to Figure 2.

**Figure 2** illustrates a schematic representation of a communication system 2 for communicating one or more contents in accordance with at least one exemplary embodiment.

According to an embodiment, the system 2 may comprise various elements 21, 22, 23 each corresponding to a system, apparatus or device, the devices 21, 22, 23 being interconnected through a network 20. The network 20 corresponds for example to a WAN (Wide Area Network), LAN (Local Area Network) or WLAN (Wireless Local Area Network) network or a combination of one or more of these networks. According to other examples, the network 20 corresponds to a broadcasting network, a cellular network, a satellite network, the internet network, or any combination thereof. The first device 21 may correspond to a server, a transmitter and/or an encoder and the second device 22 may correspond to a computing device, a rendering engine, a receiver and/or a decoder.

According to another embodiment, the network 20 may correspond to communication and/or data bus interconnecting the devices 21, 22, 23, some of the devices 21, 22, 23 being for example parts of a same device, e.g., devices 21 and 22. The first device 21 may correspond to a storage device, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 21 may correspond to an internal storage device (i.e., devices 21 and 22 being part of a same device), an attached storage device for example connected to the device 22 via a USB interface, and/or a network accessible storage device, as non-limiting examples.

The devices 21, 22, 23 of the system 2 may each correspond to a single element or device or to a plurality of elements or devices as part of a system.

The network 20 enables the transmission of data representative of one or more contents belonging to a set of contents comprising:
- a graphical content representative of a virtual environment to obtain data representative of images of a set of scenes of the virtual environment when rendering the content, e.g., data representative of color values (e.g., RGB values) of pixels of the images;
- a haptic content, i.e., haptic data representative of one or more haptic effects to be rendered by one or more haptic devices 23; the haptic data may be representative of haptic parameters representative of the haptic effects to be rendered, e.g., parameters representative of the amplitude and/or the frequency of the haptic effect, parameters representative of a transient, parameters representative of the location of the source in the space of the virtual environment, parameters representative of a haptic animation starting at a starting location and ending at an ending location in the space of the virtual environment of the video content, parameters representative of a type of haptic effect to be rendered, parameters representative of a target haptic device intended to render the haptic effect, and/or parameters representative of a rendering time and/or rendering duration of the haptic effect;
- an audio content, e.g., audio data representative of sound, voice, speech, music associated with the video content, the audio data content being rendered by one or more loudspeakers.

Some or all of the received contents may be associated with or related to each other, for example the haptic data may be associated with the graphical content and/or the audio content to render the haptic effect(s) while playing the (audio) video content, the rendered haptic effects being related to the image and/or audio contents played at the time of the rendering of the haptic effect(s).

Temporal or synchronization information may be associated with the graphical content, haptic content, and audio content to synchronize the rendering of the contents that are related to each other.

The contents that are transmitted from the first device(s) 21 to the second device(s) 22 may be of any form. For example, a content may be transmitted as an analog signal or as a digital signal representative of the data associated with the corresponding content(s).

Once received by the second device(s) 22, the signal may be converted from analog to digital or inversely to digital or analog, as it will be recognized by the skilled person in the art.

The second device(s) 22 is/are configured to process the received signal, notably for generating or determining control data representative of one or more haptic effects according to the received contents, e.g., according to the video content and the haptic content. Processing performed by the second device(s) 22 may comprise analog/digital converting, frequency filtering (e.g., low-pass filtering, band-pass filtering), temporal filtering (e.g., selecting a time window), downsampling, transforming from time space to frequency space, transforming from frequency space to time space, etc., as it will be recognized by the skilled person in the art.

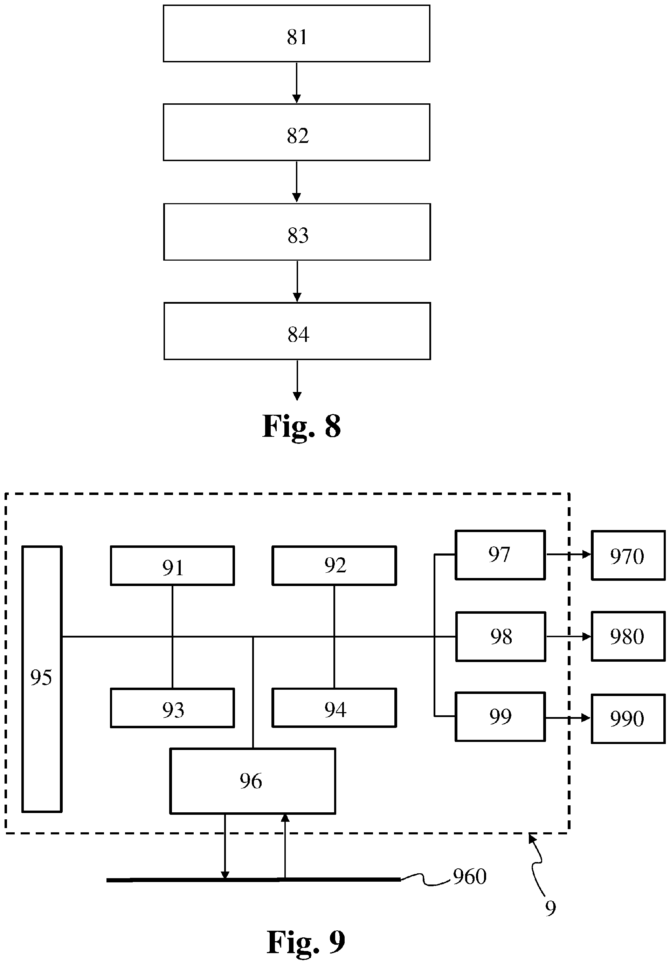

Exemplary embodiments of the first and/or second devices 21, 22 are described hereinafter with regard to figure 9.

The second device(s) 22 is(are) communicatively coupled to a set of third devices 23 comprising one or more haptic devices, a haptic device comprising one or more haptic actuators.

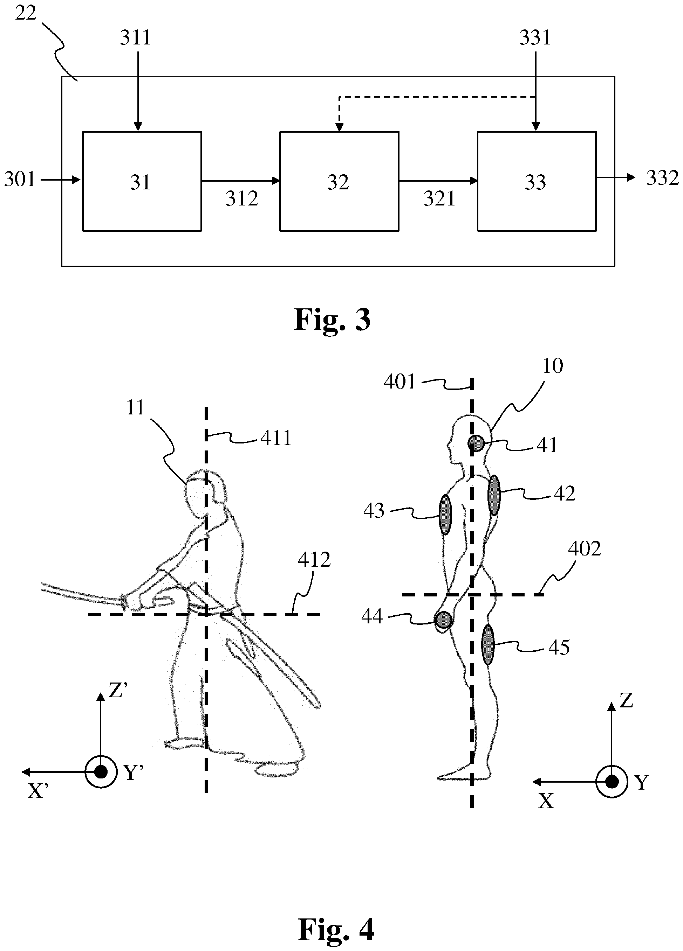

**Figure 3** illustrates a schematic representation of a generation scheme of control data for controlling a set of haptic actuators in accordance with at least one exemplary embodiment.

Blocks 31 to 33 represents indifferently operations/steps of a process/method and processing units implementing such operations/steps of the process/method. The processing units 31 to 33 may be implemented as a single element or as separate elements as a combination of hardware and software as known to those skilled in the art.

At block 31, location information 312 representative of a time and spatial-based description of the position and the orientation of the avatar 11 relative to the source 12 of the haptic effect in the virtual environment of the graphical content is obtained.

The location information is for example determined according to avatar control data 311 and according to data 301 representative of the virtual environment.

The avatar control data 311 may be received from one or more peripherals used by the user 10 to control the move of the avatar 11 in the virtual environment represented with the video content displayed on the display device 100. The data 301 may correspond to graphical data, e.g., data representative of three-dimensional (3D) objects to be rendered for displaying images that represent the various 3D scenes of the virtual environment, received from the first device 21.

Data representative of the location and the orientation of the avatar 11 in the virtual environment is determined according to the displacement of the avatar 11 in the virtual environment. The orientation of the avatar 11 corresponds for example to the direction in which the avatar is moving or to the direction in which the avatar is looking at in the virtual environment.

The data 301 may comprise source location information representative of the location of any source of haptic effect associated with the virtual environment. The source location information may correspond to 3D coordinates in the space of the virtual environment, a source of the haptic effect corresponding for example to an event occurring at the location of the source in the virtual environment.

According to a variant, the information describing the relative location of the source with respect to the avatar may be stored in a digital medium such as a file. The file may be stored in a memory of the second device 22 and/or received from the first device 21 as a stream of data, e.g., with a stream of data representative of a movie comprising the avatar and the source(s) of the haptic effect(s). According to this variant, the avatar 11 may be a character of the graphical content that may correspond to a movie. The location of the avatar 11 in the environment may be predetermined as well as the location of the source 12.

The location information 312 thus represents the relative localization of the source 12 of the haptic effect relatively to the localization and orientation of the avatar 11 in the virtual environment.

The location information 312 comprises data describing spatially and/or temporally the relative location of the source 12 with regard to the avatar 11, the source 12 and/or the avatar 11 being subject to movement or displacement within the virtual environment. In that respect, the location information 312 describes a sequence of spatial position of the source 12 relatively to the avatar 11. In a variant, the sequence of spatial position of the source 12 relatively to the avatar 11 may be described over time, i.e., in a timely manner.

The description of the sequence of positions over time may correspond to a series of locations, for example a series of 3D coordinates each describing a position of the source 12 at a different time `t'. Additional information representative of the orientation (e.g., data representative of a vector) may be associated with each point or position of the series.

A haptic effect is associated with each source of haptic effect comprised in the virtual environment. The haptic effect is indicated with an input haptic signal transporting data representative of the haptic effect, e.g., data representative of parameters of the haptic effect (e.g., parameters of amplitude and/or frequency whose values may vary over time).

The input haptic signal(s) may be received with the signal transporting the data 301 representative of the virtual environment.

According to a variant, the input haptic signal is according to a type of the source, or the event associated with the source. According to this variant, the type of the event the haptic effect is associated with is used to determine which haptic effect is to be rendered, the input haptic signal representative of the haptic effect to be rendered being for example obtained from a library of haptic effects via a mapping information (e.g., corresponding to a Look-Up Table (LUT)) mapping each type of event with a haptic effect. The type of the event is for example comprised in the data 301 and corresponds to a unique identifier identifying each type of event.

At block 32, the source 12 is projected onto the avatar 11 in the virtual environment according to the location information 312 received from block 31.

The projection of the source 12 onto the avatar 11 enables to determine which parts of the avatar 11 may receive the effect associated with the event associated with the source, and consequently which parts may be exposed to the haptic effect.

A series or sequence of projections may be performed with a projection for each position of the source 12 described with the location information 312. The projections are advantageously performed according to the sequential temporal order of the positions taken by the source 12 and temporally described with the location information 12.

The projection may be of any form and corresponds for example to a conical projection with the apex of the cone corresponding to the point representing the location of the source 12 in the virtual environment at a given time `t'.

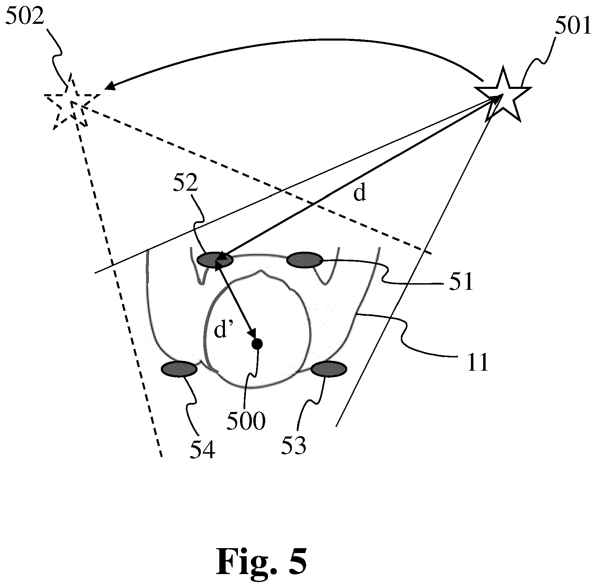

Such a projection is illustrated on **Figure 5** in accordance with at least one exemplary embodiment.

Figure 5 illustrates time-varying locations of the source 12 between an initial location 501, at an initial time `t1', and a final location 502, at a final time `t2', according to a displacement of the source 12 relative to the avatar 11. The relative displacement between the initial location 501 and the final location 502 is illustrated with an arrow on Figure 5.

Figure 5 illustrates an initial conical projection of the source at the initial location 501, the projection cone being illustrated with continuous lines, and a final conical projection of the source at the final location 502, the projection cone being illustrated with dashed lines.

The projection cone may for example be defined around a main direction. The main direction may be defined with 2 points, a first point corresponding to the location of the source and the second point corresponding to a reference point of the avatar 11, e.g., the barycentre of the avatar or a point of the head of the avatar (for example the middle of a segment linking the eyes of the avatar).

The base of the projection cone may be of any form with determined dimensions that correspond to fixed parameters of the system or to settable parameters of the system.

Each projection enables to determine or obtain projection data 321 representative of a result of the projection, the projection data 321 being indicative of the location of the source relative to various parts of the avatar 11.

When the avatar 11 corresponds to a graphical object representing a person, the parts of the avatar 11 may correspond to parts of the body of the avatar 11, called avatar body parts.

When haptic actuators 51, 52, 53, 54 are associated with one or more parts of the avatar, the projection data 321 is indicative of the location of the source relative to each haptic actuator of a set of haptic actuators 51 to 54 associated with the avatar 11.

The projection data 321 obtained from a projection may comprise:
- Data representative of visibility of each part of the avatar / of each haptic actuator: each part / haptic actuator may be assigned a visibility information taking for example 2 values, i.e., a first value (e.g., '1') when a part / a haptic actuator is visible by the source and a second value (e.g., '0') when a part / a haptic actuator is not visible by the source; a part / a haptic actuator is visible by the source when a line resulting from the projection and belonging to the cone of projection links the source to the part / haptic actuator without crossing any object of the virtual environment; for example, haptic actuators 51, 52, 53 are each visible by the source at the initial location 501 while the haptic actuator 54 being not visible as hidden from the source by the body of the avatar itself; haptic actuators 51, 52, 54 are each visible by the source at the final location 502 while the haptic actuator 53 being not visible as hidden from the source by the body of the avatar itself; and/or
- Data representative of a first distance d between the source and each part of the avatar / haptic actuator; and/or
- Data representative of a second distance d' between the part of the avatar / haptic actuator and the centre 500 of the base of the projection cone comprising said part of the avatar / haptic actuator; and/or
- Data representative of an angle between the source and each part of the avatar / haptic actuator, the angle corresponding for example to the angle between the line linking the source and each part / haptic actuator and a normal line associated with each part / haptic actuator.

The association between the haptic actuators 51 to 54 and the various parts of the avatar may be obtained from a first mapping information 331 indicating the mapping of each haptic actuator with a part of the avatar. The first mapping information may for example be stored in a LUT in a memory of the second device 22.

If the first mapping information 331 is not available at the time of the projection process, the projection data 321 is indicative of the of the location of the source relative to various parts of the avatar 11.

At block 33, control data 332 for controlling each haptic actuator of a set of haptic actuators is determined according to the first mapping information 331 and to a result of the projecting indicated in the projection data 321 received from block 32.

The first mapping information 331 is for example obtained, i.e., received, from a memory of the second device 22, e.g., from the first device 21. According to this example, the first mapping information may have been input by the user 10 via a user interface before consuming the video content / playing the video game associated with the virtual environment. According to another example, the first mapping information corresponds to a set of parameters of the rendering engine corresponding to the second device 22, this set of parameters being for example hard coded.

In an exemplary embodiment, the first mapping information 331 is obtained, i.e., determined, from spatial distribution information representative of a spatial distribution of the set of haptic actuators on the body of the user 10 and an information establishing a relationship between a posture of the user 10 in the real world and the avatar 11 in the virtual environment.

The process of determining the first mapping information 331 according to this exemplary embodiment is described in reference to **Figure 4** in accordance with at least one exemplary embodiment.

In a first operation of the process, second mapping information representative of a mapping between the set of haptic actuators 41 to 45 and body parts of a body of the user 10 is received, as well as posture information representative of a posture of the user 10.

Some haptic actuators of the set of haptic actuators are illustrated on Figure 4, i.e., a haptic actuator 41 associated with the left ear of the user 10 (the haptic actuator 41 being for example arranged in the left earpiece of a headset), a haptic actuator 42 associated with the back of the user 10, a haptic actuator 43 associated with the chest of the user 10, a haptic actuator 44 associated with the left hand of the user 10 and a haptic actuator 45 associated with the back of the left thigh of the user 10. Naturally, other haptic actuators not illustrated on Figure 4 may belong to the set of haptic actuators.

The second mapping information may for example be received from a memory of the second device 22, the second mapping information being for example stored in a LUT. The second mapping information may have been input by the user 10 via a user interface.

According to a variant, the second mapping device is received from each haptic device 23, e.g., when connecting each haptic device 23 to the second device 22. The second mapping information may be part of haptic device data received automatically from each haptic device 23 when connecting the haptic device 23 to the second device 22 implementing a haptic engine, e.g., via USB.

When connecting the haptic device 23 to the haptic engine, the haptic device 23 automatically initiates a process for transmitting the haptic device data through dedicated API(s). This process corresponds for example to a so-called "plug and play" (PnP) process, the haptic device 23 and the haptic engine corresponding to PnP devices.

The posture information may be a parameter input by the user via a dedicated user interface, e.g., when starting to consume the video content or playing the video game associated with the virtual environment.

The posture information may be selected in a list of determined positions comprising sitting position, standing position, prone position, reclining position, lying position and/or crouching position.

In a variant, the posture information is determined by image processing of images of the user acquired with a camera, e.g., a camera arranged in the real-world environment of the user 10, e.g., on the top of the display device 100 or integrated in the display device 100. The posture information may be determined with any method known to those skilled in the art, for example as described in "Human Posture Recognition Based on Images Captured by the Kinect Sensor", by Wen-June Wang et al., published on January 01, 2016.

In a second operation, the spatial distribution information representative of the spatial distribution of the set of haptic actuators 41 to 45 on the body of the user 10 relatively to a set of body reference planes of the body of the user 10 is determined according to the second mapping information and the posture information.

The set of body reference planes comprises one or more reference planes, each body reference plane dividing the body of the user 10 into two complementary parts. The one or more reference planes are defined in the space of real-world environment of the user that corresponds to an orthonormal coordinate system represented with orthonormal axis X, Y and Z.

Two body reference planes 401, 402 are illustrated on Figure 4, i.e., a first body reference plane 401 defined in plane (YZ) of the orthonormal coordinate system and comprising the center of the head of the user 10 and a second reference plane 402 defined in plane (XY) of the orthonormal coordinate system and comprising the center of the pelvis of the user 10.

The first body reference plane 401 divides the body part of the user 10 in 2 complementary parts corresponding to front and back parts of the body of the user. The second body reference plane 402 divides the body part of the user 10 in 2 complementary parts corresponding to upper and lower parts of the body of the user 10. A third body reference plane (not illustrated, defined in plane (XZ) of the orthonormal coordinate system and comprising the center of the head of the user 10) may divide the body part of the user 10 in 2 complementary parts corresponding to left and right parts of the body of the user 10.

The spatial distribution information enables to define to which complementary part defined by the one or more body reference planes each haptic actuator 41 to 45 belong to, this information may vary according to the posture.

For example, the haptic actuator 45 associated with the back of the thigh of the user 10 belongs to the back part relative to the first body reference plane 401 in the standing position illustrated on Figure 4. In a sitting position, the same haptic actuator 45 associated with the back of the thigh of the user 10 would belong to the front part of the user 10 relative to the first body reference plane 401.

In another example, the haptic actuator 44 associated with the hand of the user 10 belongs to the lower part relative to the second body reference plane 402 in the standing position illustrated on Figure 4. In a sitting position, the same haptic actuator 44 associated with the hand of the user 10 may belong to the upper part of the user 10 relative to the second body reference plane 402.

The first mapping information indicative of the mapping of the haptic actuators 41 to 45 with the parts of the avatar 11 may then be determined according to the spatial distribution information and a set of avatar reference planes 411, 412, each avatar reference plane 411, 412 corresponding to one different body reference plane of the set of body reference planes 401, 402, respectively, each avatar reference plane dividing the avatar 11 into two complementary parts.

The set of avatar reference planes comprises one or more reference planes, each avatar reference plane dividing the avatar 11 into two complementary parts. The one or more avatar reference planes are defined in the space of the virtual environment of the avatar 11 that corresponds to an orthonormal coordinate system represented with orthonormal axis X', Y' and Z'.

Two avatar reference planes 411, 412 are illustrated on Figure 4, i.e., a first avatar reference plane 411 associated with the first body reference plane 401 and defined with the same elements, i.e., in the plane (Y'Z') and a second avatar reference plane 412 associated with the second body reference plane 402 and defined with the same elements, i.e., in the plane (X'Y'). A third avatar reference plane may further be defined in the same way as the third body reference plane.

The first avatar reference plane 411 divides the avatar 11 into 2 complementary parts, namely the front and back parts of the avatar 11; the second avatar reference plane 412 divides the avatar 11 into 2 complementary parts, namely the upper and lower parts of the avatar 11; and the third avatar reference plane divides the avatar 11 into 2 complementary parts, namely the left and right parts of the avatar 11.

The use of the body and avatar reference planes to determine the first mapping information enables to adjust the mapping of the haptic actuators with the parts of the avatar that take the posture of the user into account. Indeed, the posture of the user may impact the haptic actuators that should render the haptic effect to improve the consistency between the haptic feedback and the visual feedback of the scene displayed on the display device 100.

A change in the posture of the user 10 may change the projection data 321, e.g., the visibility information associated with each haptic actuator. For example, depending on whether the haptic actuator 45 belongs to the front or back parts, a haptic effect having a source located in front of the avatar will be felt differently: when the haptic actuator 45 belongs to the front part, the haptic actuator 45 is visible by the source and may be selected to render the haptic effect while when the haptic actuator 45 belongs to the back part, the haptic actuator 45 is not visible by the source and may not be selected to render the haptic effect.

The control data 332 determined at block 33 to control the haptic actuators according to the first mapping information 331 and to the projection data 321 may for example comprise time control information for time-based controlling each haptic actuator 41 to 45, the time control information comprising for example a starting time and an ending time of activation of each haptic actuator, the thus defined activation period being null when the starting time equals the ending time.

The starting time may correspond to the time associated with the first projection (temporally speaking) for which a haptic actuator becomes visible from the source 12 and the ending time may correspond to the time associated with the last projection (temporally speaking) for which the haptic actuator becomes not visible from the source 12 after having been visible.

The control data 332 may further comprise haptic data for controlling each haptic actuator, the haptic data being determined according to the input haptic signal associated with the source 12 of the haptic effect and according to the projection data 321.

The haptic data may be determined by processing the input haptic signal according to the projection data 321.

In a first example, the processing comprises amplitude modulating the input haptic signal according to amplitude parameters, the amplitude parameters being according to the projection data 321. For example, the amplitude may be determined according to a transfer function determining the amplitude according to the projection data 321.

The amplitude parameters are for example according to a distance between the source 12 of the haptic effect and the haptic actuator, the distance may vary over time with the displacement of the source 12 relative to the avatar 11. For example, the amplitude is obtained as a function of the distance, the longer the distance, the lower the amplitude and conversely, the lower the distance, the greater the amplitude. According to a variant, the amplitude parameters are according to the angle between the source 12 of the haptic effect and the haptic actuator, the angle may vary over time with the displacement of the source 12 relative to the avatar 11.

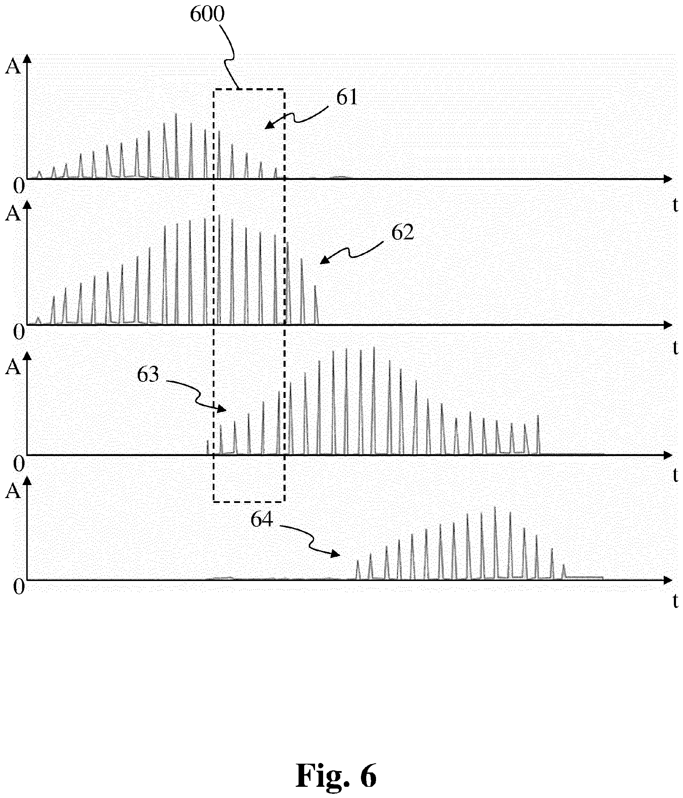

The result of the amplitude modulation applied to the input haptic signal for each haptic actuator 51 to 54 of figure 5 is illustrated on **Figure 6** in accordance with at least one exemplary embodiment.

Figure 6 illustrates control signals / data to be provided to the haptic actuators for rendering the haptic effect indicated by the input haptic signal / data associated with the source 12 according to the displacement of the source 12 between the initial position 501 and the final position 502.

Each diagram of figure 6 illustrates a control signal to be provided to a different haptic actuator 51 to 54, the abscissa axis representing the time and the ordinate axis representing the amplitude, all diagram sharing the same origin for the time and the amplitude.

The signal 61 of the upper diagram corresponds to the control signal to be provided to the haptic actuator 53. The signal 62 of the diagram below the diagram of signal 61 corresponds to the control signal to be provided to the haptic actuator 51. The signal 63 of the diagram below the diagram of signal 62 corresponds to the control signal to be provided to the haptic actuator 52. The signal 64 of the lower diagram corresponds to the control signal to be provided to the haptic actuator 54.

According to the relative motion of the source 12 illustrated on Figure 5, the first haptic actuator to be impacted, in a temporal way, by the projection of the source 12 onto the avatar 11 corresponds to the haptic actuator 53, then the second haptic actuator to be impacted corresponds to the haptic actuator 51, then the third haptic actuator to be impacted corresponds to the haptic actuator 52 and finally the last haptic actuator to be impacted corresponds to the haptic actuator 54. Consequently, the haptic actuator 53 is controlled first to render the haptic effect, in a temporal way, followed by the haptic actuator 51, followed by the haptic actuator 52 and finally followed by the haptic actuator 54.

A plurality of the haptic actuators is controlled concurrently to render the haptic effect, which corresponds to the time period during which this plurality of haptic actuators is impacted by the projection of the source 12 for a same location of the source 12. For example, as highlighted with the rectangle 600 in dashed lines, haptic actuators 53, 51 and 52 are activated concurrently during a determined time period, the control signals 61, 62, 63 overlapping during this determined time period.

The amplitude of the control signals 61 to 64 resulting from the amplitude modulation applied to the input haptic signal vary from one control signal to another control signal and vary in a timely manner for each control signal 61 to 64.

As it appears from Figure 6, the amplitude is higher for haptic actuators 51, 52 (for respectively control signals 62, 63) than for haptic actuators 53, 54 (for respectively control signals 61, 64) as the source 12 moves in a closer vicinity for the haptic actuators 51, 52 than for the haptic actuators 53, 54.

The amplitude may be determined as a function of the first distance d and/or the second distance d'.

The first distance d corresponds to the distance between the location of the source 12 and the location / position of the considered haptic actuator.

The second distance d' corresponds to the distance between the location / position of the considered haptic actuator and the centre of the projection surface resulting from the projection of the source 12 onto the avatar, the surface comprising the considered haptic actuator (or a point of the considered haptic actuator representing the considered haptic actuator). When the projection corresponds to a conical projection, the projection surface corresponds to the base of the projection cone that may for example correspond to a circle or to an ellipse. Consideration of the second distance d' to determine the amplitude may enable to obtain a continuous and/or smooth change of the amplitude of the haptic effect while the source 12 and/or the avatar 11 is / are moving.

In a second example, the processing comprises frequency shifting the input haptic signal to obtain a doppler effect when a distance between the source 12 and the avatar 11 increases or decreases. For example, the frequency (and optionally the amplitude) may be determined according to a transfer function determining the frequency (and the amplitude) according to the projection data 321.

For example, when the source 12 moves away from the avatar 11 according to a main direction, the frequency of the input haptic signal may be shifted to lower frequencies to obtain the control signal. When the source 12 moves closer to the avatar 11 according to a main direction, the frequency of the input haptic signal may be shifted to higher frequencies to obtain the control signal.

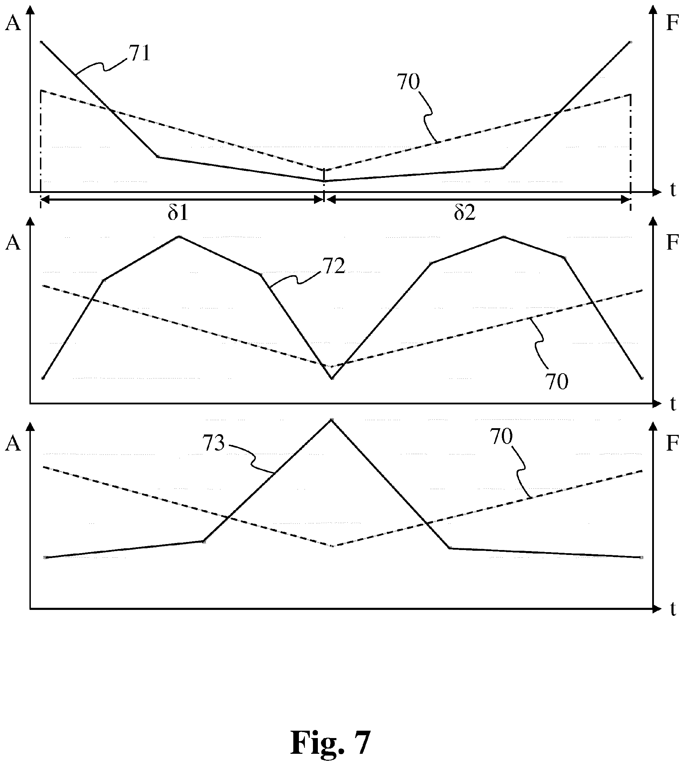

The result of the frequency modulation applied to the input haptic signal for some of the haptic actuators of figure 5 is illustrated on **Figure 7** in accordance with at least one exemplary embodiment.

Figure 7 illustrates control signals / data to be provided to the haptic actuators for rendering the haptic effect indicated by the input haptic signal / data associated with the source 12 according to the displacement of the source 12, notably when the source 12 moves away from or closer to the avatar 11 according to a main direction.

Each diagram of figure 7 illustrates curves of frequency and amplitude parameters of a control signal to be provided to a different haptic actuator 51, 52, 53, the abscissa axis representing the time 't', the left-hand side ordinate axis representing the amplitude 'A' and the right-hand side ordinate axis representing the frequency 'F', all diagram sharing the same origin for the time, the amplitude and the frequency.

Each diagram of Figure 7 illustrates a frequency curve 70 as a function of time, in dashed line, and an amplitude curve 71, 72, 73 as a function of time, in full continuous line.

The upper diagram may apply to the haptic actuator 53, the diagram between the upper diagram and the lower diagram applying to the haptic actuator 51 and the lower diagram applying to the haptic actuator 52. The frequency curve 70 is the same for all haptic actuators 51, 52, 53, the frequency curve 70 showing the variations of the frequency component of the control signal used to control the haptic actuators.

The frequency curve 70 comprises 2 phases according to the non-limiting example of figure 7:
- a first phase 51 with a frequency shift to lower frequencies, i.e., with a decrease of the frequency F from a high frequency value to a low frequency value, corresponding to a source moving away from the avatar (i.e., the distance between the source 12 and the avatar 11 increasing); and
- a second phase δ2, following temporarily following the first phase 51, with a frequency shift to higher frequencies, i.e., with an increase of the frequency F from the low frequency value to the high frequency value, corresponding to a source moving closer / back to the avatar (i.e., the distance between the source 12 and the avatar 11 decreasing).

Each amplitude curve 71, 72 and 73 shows the variations of the amplitude component of the control signal used to control the haptic actuator 53, 51 and 52, respectively.

The amplitude parameter is modulated as described previously with regard to figure 6, i.e., for example as a function of the first distance d and/or the second distance d' and/or an angle between the source 12 and each haptic actuator 53, 51 and 52, according to the relative displacement of the source 12 with respect to the avatar 11.

Each haptic actuator is advantageously controlled with the control data signal 332 received by each haptic actuator from the second device 22.

A plurality of haptic actuators of the set of haptic actuators associated with the user 10 is thus controlled according to a temporal sequence, which is determined according to the time control information, as described for example with reference to figure 6 and 7.

Such a control of the haptic actuators increases the feeling of immersion of the user 10 consuming the video content or playing the video game with haptic effects, which are rendered spatially (on the body of the user) and timely with a better matching with the motion of the sources of the haptic effects relatively to the location and orientation of the avatar 11 of the user 10.

**Figure 8** shows a schematic block diagram of steps of a method of controlling a set of haptic actuators in accordance with at least one exemplary embodiment.

In a first step 81, location information representative of a time and spatial-based description of position and orientation of an avatar relative to a source of a haptic effect in a virtual environment is obtained, the avatar being associated with a user.

In a second step 82, first mapping information representative of a mapping between the set of haptic actuators and a set of parts of the avatar is obtained.

In a third step 83, the source is projected onto the avatar in the virtual environment according to the location information.

In a fourth step 84, control data for controlling each haptic actuator of the set of haptic actuators is determined according to a result of the projecting and the first mapping information.

**Figure 9** shows a schematic block diagram illustrating an example of a system 9 in which various aspects and exemplary embodiments are implemented.

System 9 may be embedded as one or more devices including the various components described below. In various embodiments, the system 9 may be configured to implement one or more of the aspects described in the present application.

Examples of equipment that may form all or part of the system 9 include personal computers, laptops, smartphones, tablet computers, digital multimedia set top boxes and their associated processing systems, head mounted display devices (HMD, see-through glasses), haptic sensors or actuators, "caves" (system including multiple displays), servers, haptic encoders, haptic decoders, post-processors processing output from a haptic decoder, pre-processors providing input to a haptic encoder, web servers, set-top boxes, wireless (e.g., Bluetooth^{®}) connected wearable haptic devices, game controller, mouse, mousepad, keyboard, palm rest, chairs, desk, XR headset, headphones, bracelet, head and/or lumbar support device or chair, any other device for processing haptic data or haptic signals, or other communication devices. Elements of system 9, singly or in combination, may be embodied in a single integrated circuit (IC), multiple ICs, and/or discrete components. For example, in at least one embodiment, the processing and encoder/decoder elements of system 9 may be distributed across multiple ICs and/or discrete components. In various embodiments, the system 9 may be communicatively coupled to other similar systems, or to other electronic devices, via, for example, a communications bus or through dedicated input and/or output ports.

The system 9 may include at least one processor 91 configured to execute instructions loaded therein for implementing, for example, the various aspects described in the present application. Processor 91 may include embedded memory, input output interface, and various other circuitries as known in the art. The system 9 may include at least one memory 92 (for example a volatile memory device and/or a non-volatile memory device). System 9 may include a storage device 94, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 94 may include an internal storage device, an attached storage device, and/or a network accessible storage device, as non-limiting examples.

The system 9 may include an encoder/decoder module 93 configured, for example, to process data to provide encoded/decoded haptic signal or data, and the encoder/decoder module 93 may include its own processor and memory. The encoder/decoder module 93 may represent module(s) that may be included in a device to perform the encoding and/or decoding functions. As is known, a device may include one or both of the encoding and decoding modules. Additionally, encoder/decoder module 93 may be implemented as a separate element of system 9 or may be incorporated within processor 91 as a combination of hardware and software as known to those skilled in the art.

Program code to be loaded onto processor 91 or encoder/decoder 93 to perform the various aspects described in the present application may be stored in storage device 94 and subsequently loaded onto memory 92 for execution by processor 91. In accordance with various embodiments, one or more of processor 91, memory 92, storage device 94, and encoder/decoder module 93 may store one or more of various items during the performance of the processes described in the present application. Such stored items may include, but are not limited to, data representative of audio content, data representative of video content, haptic-related data, a bitstream, matrices, variables, and intermediate or final results from the processing of equations, formulas, operations, and operational logic.

In several embodiments, memory inside of the processor 91 and/or the encoder/decoder module 93 may be used to store instructions and to provide working memory for processing that may be performed during data processing, encoding or decoding.

In other embodiments, however, a memory external to the processing device (for example, the processing device may be the processor) may be used for one or more of these functions. The external memory may be the memory 92 and/or the storage device 94, for example, a dynamic volatile memory and/or a non-volatile flash memory. In at least one embodiment, a fast external dynamic volatile memory such as a RAM may be used as working memory for data processing.

The input to the elements of system 9 may be provided through various input devices as indicated in block 95. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 95 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 9 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 91 as necessary. Similarly, aspects of USB or HDMI interface processing may be implemented within separate interface ICs or within processor 91 as necessary. The processed stream may be provided to various processing elements, including, for example, processor 91, and encoder/decoder 93 operating in combination with the memory and storage elements to process the data stream as necessary for presentation on an output device.

Various elements of system 9 may be provided within an integrated housing. Within the integrated housing, the various elements may be interconnected and transmit data therebetween using suitable connection arrangement, for example, an internal bus as known in the art, including the I2C bus, wiring, and printed circuit boards.

The system 9 may include communication interface 96 that enables communication with other devices via communication channel 960. The communication interface 96 may include, but is not limited to, a transceiver configured to transmit and to receive data over communication channel 960. The communication interface 96 may include, but is not limited to, a modem or network card and the communication channel 960 may be implemented, for example, within a wired and/or a wireless medium.

Data may be streamed to the system 9, in various embodiments, using a Wi-Fi network such as IEEE 802.11. The Wi-Fi signal of these embodiments may be received over the communications channel 960 and the communications interface 96 which are adapted for Wi-Fi communications. The communications channel 960 of these embodiments may be typically connected to an access point or router that provides access to outside networks including the Internet for allowing streaming applications and other over-the-top communications.

Other embodiments may provide streamed data to the system 9 using a set-top box or a computer that delivers the data over the HDMI connection of the block 95.

Still other embodiments may provide streamed data to the system 9 using the RF connection of the block 95.

The streamed data may be used as a way for signaling information used by the system 9. The signaling information may comprise the data encoded in a container such as a binary stream or a haptic effect file for example.

It is to be appreciated that signaling may be accomplished in a variety of ways. For example, one or more syntax elements, flags, and so forth may be used to signal information to a corresponding data processing device in various embodiments.

The system 9 may provide an output signal to various output devices, including a display 970, speakers 980, and other peripheral devices 990 like haptic devices/actuators.

In various embodiments, control signals may be communicated between the system 9 and the display 970, speakers 980, or other peripheral devices 990 using signaling such as AV.Link (Audio/Video Link), CEC (Consumer Electronics Control), Audio protocols, USB (Universal Serial Bus), HIF UHP (Haptics Industry Forum - Universal Haptic Protocol) or other communications protocols that enable device-to-device control with or without user intervention.

The output devices may be communicatively coupled to system 9 via dedicated connections through respective interfaces 97, 98, and 99.

Alternatively, the output devices may be connected to system 9 using the communications channel 960 via the communications interface 96. The display 970, speakers 980 and/or haptic device(s) (actuators) may be integrated in a single unit with the other components of system 9 in an electronic.

In various embodiments, the display interface 97 may include a display driver, such as, for example, a timing controller (T Con) chip.

The display 970, speakers 980 and/or haptic device(s) (actuators) may alternatively be separate from one or more of the other components. In various embodiments in which the display 970, speakers 980 and/or haptic device(s) (actuators) may be external components, the output signal may be provided via dedicated output connections, including, for example, HDMI ports, USB ports, or COMP outputs.

In **Figures 1 to 9**, various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic encoders, video and/or haptic decoders, haptic engine, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, XR headset, headphones, bracelet, head and/or lumbar support device or chair, and any other device for processing haptic data or signals representative of one or more haptic feedback or effect, or other communication devices. As should be clear, the equipment may be mobile.

Computer software may be implemented by the processor 91 or by hardware, or by a combination of hardware and software. As a non-limiting example, the embodiments may be also implemented by one or more integrated circuits. The memory 92 may be of any type appropriate to the technical environment and may be implemented using any appropriate data storage technology, such as optical memory devices, magnetic memory devices, semiconductor-based memory devices, fixed memory, and removable memory, as non-limiting examples. The processor 91 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of controlling a set of haptic actuators, the method comprising the steps of:
- obtaining (81) location information representative of a time and/or spatial-based description of position and orientation of an avatar (11) relative to a source (12) of a haptic effect in a virtual environment, said avatar (11) being associated with a user (10);
- obtaining (82) first mapping information representative of a mapping between the set of haptic actuators and a set of parts of said avatar (11);
- projecting (83) said source (12) onto said avatar (11) in said virtual environment according to said location information;
- determining (84) control data for controlling each haptic actuator of said set of haptic actuators, said control data being determined according to a result of said projecting and said first mapping information.

2. The method according to claim 1, further comprising:
- receiving second mapping information representative of a mapping between the set of haptic actuators (41 to 45) and body parts of a body of said user (10) and posture information representative of a posture of said user (10);
- determining spatial distribution information representative of a spatial distribution of said set of haptic actuators (41 to 45) on the body of the user (10) relatively to a set of body reference planes (401, 402) of the body of the user (10) according to said second mapping information and said posture information, said set of body reference planes (401, 402) comprising at least one body reference plane, each body reference plane dividing said body into two complementary parts,
wherein said first mapping information is determined according to said spatial distribution information and a set of avatar reference planes (411, 412), said set of avatar reference planes (411, 412) comprising at least one avatar reference plane, each avatar reference plane corresponding to one different body reference plane of said set of body reference planes, each avatar reference plane dividing said avatar (11) into two complementary parts.

3. The method according to claim 1 or 2, wherein said control data comprises time control information for time-based controlling said each haptic actuator.

4. The method according to one of claims 1 to 3, further comprising receiving an input haptic signal representative of said haptic effect, said control data comprising haptic data for controlling said each haptic actuator, said haptic data being determined according to said input haptic signal and said result of said projecting.

5. The method according to claim 4, wherein said haptic data is determined by processing said input haptic signal according to said result of said projecting.

6. The method according to claim 5, wherein said processing comprises amplitude modulating said input haptic signal according to amplitude parameters, said amplitude parameters being according to said result of said projecting.

7. The method according to claim 6, wherein said amplitude parameters being according to a distance between said source (12) and said each haptic actuator.

8. The method according to claim 5, wherein said processing comprises frequency shifting said input haptic signal to obtain a doppler effect when a distance between said source and said avatar increases or decreases.

9. The method according to one of claims 1 to 8, further comprising controlling said each haptic actuator according to said control data.

10. The method according to claim 9 in dependency to claim 3, wherein a plurality of haptic actuators of said set of haptic actuators is controlled based on a temporal sequence according to said time control information.

11. The method according to claim 9 or 10 in dependency to claim 4, wherein at least two haptic actuators of said set of haptic actuators are controlled concurrently according to said control data to render at least a part of said haptic effect.

12. The method according to one of claims 1 to 11, wherein said projecting (83) is according to a conical projection with the apex of the cone corresponding to the source (12) of the haptic effect.

13. An apparatus (9) of controlling a set of haptic actuators, wherein said apparatus comprising a memory (92) associated with at least a processor (91) configured to implement the method according to any one of claims 1 to 12.

14. A computer program product comprising instructions of program code for executing the method according to any one of claims 1 to 12, when said program is executed on a computer.
